# EUROPÄISCHE PATENTANMELDUNG

(11) **EP 2 671 737 A2**
(43) Veröffentlichungstag der Anmeldung: **11.12.2013**
(21) Anmeldenummer: 13002734.5
(22) Anmeldetag: 27.05.2013
(51) Int. Cl.: B60D 1/54, B60D 1/24

(54) **Antriebseinrichtung für einen Kugelhals einer Anhängekupplung**

(30) Priorität: 04.06.2012 DE 102012011053
(71) Anmelder: WESTFALIA - Automotive GmbH, 33378 Rheda-Wiedenbrück (DE)
(72) Erfinder: Söffge, Friedhelm, D-71229 Leonberg (DE)
(74) Vertreter: Bregenzer, Michael

(57) **Zusammenfassung**

Eine Antriebseinrichtung ist für einen Kugelhals einer Anhängekupplung eines Kraftfahrzeugs geeignet, der mit einem am Aufbau des Kraftfahrzeugs gehaltenen Kugelhalslagerkopf (3) verbunden ist, wobei die Antriebseinrichtung einen Elektromotor (8) umfasst, der über eine erste Drehachse (9) und eine zweite im Winkel dazu verlaufende Drehachse (10) Drehbewegungen des Kugelhalslagerkopfes (3) und des Kugelhalses beeinflusst.

Um diese Antriebseinrichtung zu optimieren, ist zwischen einander zugekehrten ersten und zweiten Stirnseiten (11,12) des Elektromotors (8) bzw. des Kugelhalslagerkopfes (3) ein Verbindungsglied (13) vorgesehen, das sich entlang der im Winkel zueinander augerichteten bzw. geknickten Drehachsen (9,10) erstreckt und einerseits mit dem Elektromotor (8) und andererseits mit dem Kugelhalslagerkopf (3) in Wirkverbindung steht.

## Beschreibung

Die Erfindung bezieht sich auf eine Antriebseinrichtung für einen Kugelhals einer Anhängekupplung eines Kraftfahrzeugs, nach dem Oberbegriff des Patentanspruchs 1.

Es ist eine Anhängevorrichtung für Zugfahrzeuge bekannt, DE 202 03 270 U, die eine Zugstange umfasst. Die Zugstange ist um zumindest zwei rotatorische Achsen gelagert, und sie weist mindestens einen mechanischen Antrieb zur Bewegung der Zugstange auf. Darüber hinaus ist die Zugstange zwischen einer Betriebsstellung und einer Ruhestellung verstellbar. Der mechanische Antrieb ist mit einem Antriebsmotor versehen, der vorzugsweise als Elektromotor, insbesondere als Getriebemotor ausgebildet ist. Besagte Zugstange ist mit einer kardanischen Lagerung mit einem Schwenklager und einem Drehlager mit den rotatorischen Achsen ausgestattet, die sich kreuzen. Außerdem verfügt die Anhängevorrichtung über Einrichtungen zur Kontrolle und Fixierung der Endlagen der Zugstange in der Betriebs- und der Ruhestellung.

Aus der DE 20 2005 020 447 geht eine Antriebseinheit für eine mit einer Kugelstange hervor, die um eine Schwenkachse zwischen einer Betriebsstellung und einer Ruhestellung verschwenkbar ist. Die Antriebseinheit ist über eine Antriebswelle antreibbar, und die Antriebseinheit weist eine Verriegelung der Anhängekupplung auf. In der verriegelten Stellung greift die Anhängekupplung in einen an der Antriebseinheit angeordneten Kopf der schwenkbaren Kugelstange ein.

Aufgabe der Erfindung ist es, eine Antriebseinrichtung für einen Kugelhals einer Anhängekupplung zu konzipieren, welche Antriebseinrichtung einfach zu realisieren sowie räumlich günstig gestaltet ist und einen sicheren Betrieb gewährleistet. Dabei sollte aber auch darauf geachtet werden, dass die baulichen Maßnahmen für die Antriebseinrichtung wirtschaftlich vertretbar sind.

Erfindungsgemäß wird diese Aufgabe durch die Merkmale des Patenanspruch 1 gelöst. Weitere, die Erfindung ausgestaltende Merkmale sind in den Unteransprüchen enthalten.

Die mit der Erfindung hauptsächlich erzielten Vorteile sind darin zu sehen, dass die Antriebseinrichtung für den Kugelhalslagerkopf, über die letztlich der Kugelhals bewegt wird, eine vorbildliche Funktion aufweist. Musterhaft dabei ist, dass der z.B. durch ein kostengünstiges Kaufteil gebildete Elektromotor unter Vermittlung des Verbindungsglieds mit dem Kugelhalslagerkopf Beispiel gebend zusammenarbeitet. Die Konstruktion mit diesen Merkmalen beansprucht wenig Bauraum, und sie lässt im Wesentlichen problemfrei umsetzen. Hervorzuheben ist auch das ausgezeichnete Zusammenwirken des Antriebszapfens des Elektromotors mit dem Hohlrad des Verbindungsglieds, und zwar mit der Innenverzahnung und der Außenverzahnung. Das Verbindungsglied in Gestalt der Balgkupplung bzw. des Kreuzgelenks zur Übertragung von Drehmomenten zwischen Elektromotor und Kugelhalslagerkopf stellt ein im Prinzip erprobtes und aufwandarmes Konstruktionselement dar, das die Anhängekupplungs-Technologie bereichert.

Der Kugelhals ist am und/oder im Kugelhalslagerkopf schwenkbar und/oder verschieblich gelagert. Mithin ist also auch eine Axial-Verschiebung zusätzlich zu einer Schwenkbewegung des Kugelhalses relativ zum fahrzeugfest festgelegten oder festlegbaren Kugelhalslagerkopf möglich. Der Kugelhals kann auch bezüglich des Kugelhalslagerkopfs ausschließlich schwenkbar oder verschieblich sein.

Der Kugelhalslagerkopf kann zweiteilig sein und eine fahrzeugfest am Kraftfahrzeug befestigte oder befestigbare erste Lagerkomponente und eine zweite, mit dem Kugelhals verbundene, beispielsweise mit diesem einstückige, Lagerkomponente umfassen.

Es ist aber auch möglich, dass der Kugelhalslagerkopf den Kugelhals unmittelbar lagert.

Der Kugelhalslagerkopf kann eine einteilige Baueinheit darstellen oder auch mehrteilig sein.

Der Kugelhalslagerkopf kann eine Aufnahme, in die der Kugelhals mit einem entsprechenden Lagerzapfen eingreift und/oder einen insbesondere als Lagerzapfen ausgestalteten Lagervorsprung aufweisen, auf dem der Kugelhalslagerkopf gelagert ist.

An dieser Stelle sei erwähnt, dass der Kugelhals selbstverständlich auch andere Kuppelelemente zum Ankuppeln eines Anhängers oder eines Lastenträgers tragen kann als eine Kugel, beispielsweise eine Steckaufnahme haben kann oder dergleichen.

Der Kugelhals ist beispielsweise zwischen einer Betriebsstellung, die zum Ziehen eines Anhängers vorgesehen ist, und einer Ruhestellung an dem Kugelhalslagerkopf beweglich gelagert, in der der Kugelhals beispielsweise näher beim Heck des Kraftfahrzeugs angeordnet ist, zum Beispiel in einem Ruhestellungsraum zwischen Stoßfänger und Karosserie im Wesentlichen verborgen ist.

In der Zeichnung werden Ausführungsbeispiele der Erfindung gezeigt, die nachstehend näher erläutert werden.

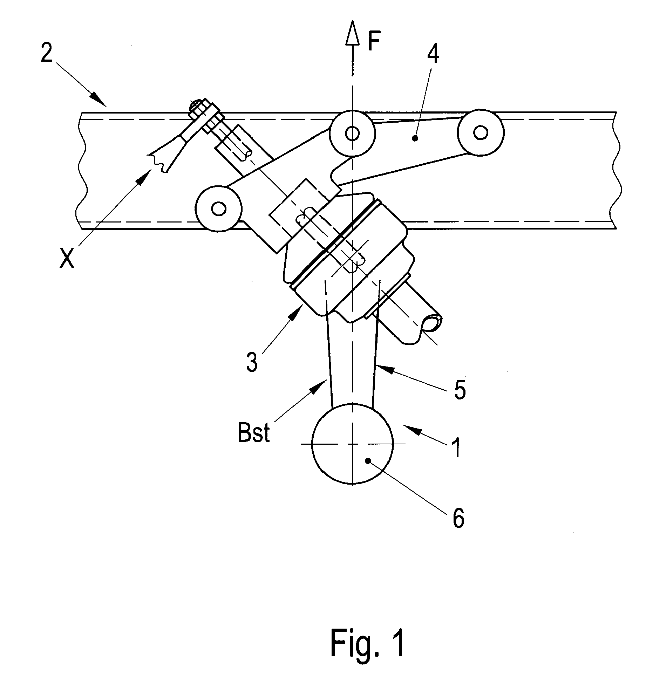

Es zeigen
- Fig. 1: eine schematische Ansicht von oben auf eine Anhängekupplung für ein Kraftfahrzeug mit einem Querträger, an dem ein Kugelhalslagerkopf mit einem Kugelhals, beeinflussbar durch eine Antriebseinrichtung, in Lage gehalten wird,
- Fig. 2: eine Einzelheit X der Fig. 1 mit einer ersten Ausführungsform einer Antriebseinrichtung in größerem Maßstab,
- Fig. 3: eine Ansicht entsprechend Fig. 2 mit einer zweiten Ausführungsform einer Antriebseinrichtung.

Eine Anhängekupplung 1 für ein nicht näher dargestelltes Kraftfahrzeug, dessen Fahrtrichtung mit F angegeben ist, ist z.B. in einem Heck dieses Kraftfahrzeugs befestigt und weist einen Querträger 2 auf, an dem ein Kugelhalslagerkopf 3 unter Vermittlung einer Lagerkonsole 4 gehalten wird. Der Kugelhalslagerkopf 3 trägt einen Kugelhals 5, der an einem freien Ende mit einer Kupplungskugel 6 versehen ist. In den Kugelhalslagerkopf 3 eingebaut ist ein axial beweglicher Sperrbolzen einer Entriegelungseinrichtung. Nach mechanischer Beeinflussung bzw. Ausrücken der Entriegelungseinrichtung ist der Kugelhals 5 von einer von einer Betriebsstellung Bst in eine Ruhestellung -nicht gezeigt- bewegbar. Einzelheiten der Entriegelungseinrichtung bzw. des Sperrbolzens sind in der DE 103 20 302 A1 dargestellt.

Der Kugelhals 5 bzw. der bewegliche Teil des Kugelhalslagerkopfs 3 sind mittels einer Antriebseinrichtung 7 verschwenkbar, der über einen Elektromotor 8 verfügt. Der Elektromotor 8 ist fest an einem Aufbau -nicht dargestellt- des Kraftfahrzeugs angebracht. Eine erste Drehachse 9 des Elektromotors 8 verläuft im stumpfen Winkel α zu einer zweiten Drehachse 10 des Kugelhalslagerkopfs 3. Zwischen einer ersten Stirnseite 11 und einer zweiten Stirnseite 12, die mit Abstand einander zugekehrt sind, ist ein Verbindungsglied 13 vorgesehen, das entlang der im Winkel α zueinander ausgerichteten bzw. geknickten Drehachsen 9 und 10 verläuft.

Benachbart der ersten Stirnseite 11 ist ein Antriebzapfen 14 aus einem Gehäuse 15 des Elektromotors 8 herausgeführt. Der Antriebszapfen 14 ist mit einer Außenverzahnung 16 versehen, die mit einer Innverzahnung 17 eines Hohlrad 18 des Verbindungsglieds 13 kämmt. Das Hohlrad 18 ist z.B. vorgefertigt und durch Fügen mit einem angrenzenden bspw. rohrförmigen Verbindungsgliedabschnitt 19 des Verbindungsglieds 13 fest verbunden, wobei das Hohlrad 18 in den rohrförmigen Verbindungsgliedabschnitt 19 eingeführt ist. An der zweiten Stirnseite 12 ist das Verbindungsglied 13 unter Vermittlung eines Befestigungsflansches 20 und Schrauben 21 an dem Kugelhalslagerkopf 3 befestigt. Darüber hinaus ist zwischen dem Hohlrad 18 und einem Gehäusebereich 22 des Gehäuses 15 des Elektromotors 8 eine Dichtung 23 wirksam, die nach Art eines umlaufenden Rings an besagtem Hohlrad 18 angebracht ist und sich mit einer Dichtlippe 24 am Gehäusebereich 22 abstützt.

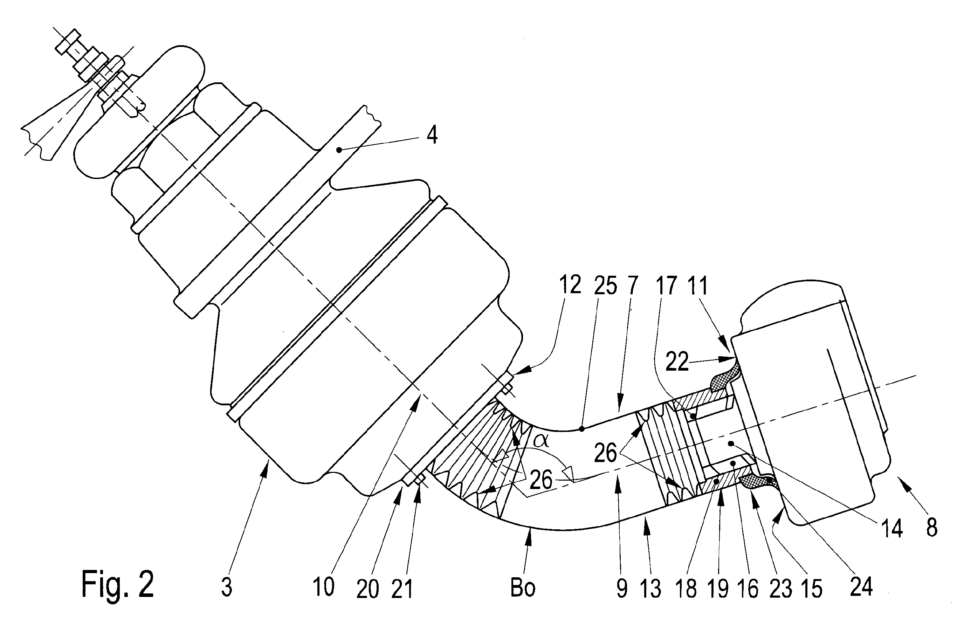

In Fig. 2 ist das Verbindungsglied 13 als torsionssteife Balgkupplung 25 aus Metall, auch Edelmetall, ausgeführt, die die auftretenden Drehmomente funktionsgereicht überträgt. Die Balgkupplung 25, umfassend einen Bogen Bo, ist lediglich schematisch dargestellt, wobei die spezielle Konstruktion der Balgkupplung 25, einschließlich Zahl und Form ihrer Wellen 26 rechnerisch oder iterativ definierbar ist.

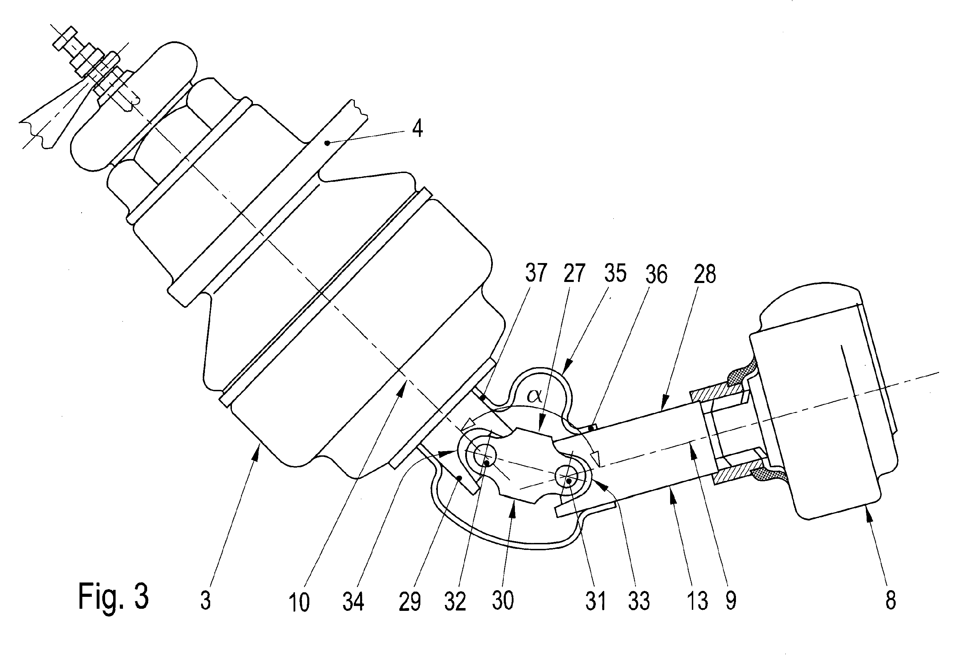

Aus der Fig. 3 ist ersichtlich, dass das Verbindungsglied 13 als Kreuzgelenk 27 dargestellt ist, das einen ersten festen Wellenabschnitt 28 und eine zweiten festen Wellenabschnitt 29 besitzt. Das Kreuzgelenk 27 umfasst ein oder mehrere Verbindungselemente 30, die mit einem ersten Gelenkzapfen 31 und einem zweiten Gelenkzapfen 32 versehen sind. Die Gelenkzapfen 31 und 32 sind in Aufnahmen 33 und 34 des ersten Wellenabschnitts 28 bzw. des zweiten Wellenabschnitts 29 festgelegt. Schließlich ist das Kreuzgelenk 27 mittels einer Manschette 35 verkleidet, wobei die Manschette 35 Befestigungskrägen 36 und 37 umfasst, die an den ersten und zweiten Wellenabschnitten in 28 und 29 Lage gehalten werden.

## Patentansprüche

1. Antriebseinrichtung für einen Kugelhals einer Anhängekupplung eines Kraftfahrzeugs, der mit einem am Aufbau des Kraftfahrzeugs gehaltenen oder am Aufbau befestigbaren Kugelhalslagerkopf verbunden ist, wobei die Antriebseinrichtung einen Elektromotor umfasst, der über eine erste Drehachse und eine zweite im Winkel dazu verlaufende Drehachse Drehbewegungen des Kugelhalslagerkopfs und/oder des Kugelhalses beeinflusst, **dadurch gekennzeichnet, dass** zwischen einander zugekehrten ersten und zweiten Stirnseiten (11 und 12) des Elektromotors (8) bzw. des Kugelhalslagerkopf (3) oder des Kugelhalses ein Verbindungsglied (13) vorgesehen ist, das sich entlang der im Winkel (α) zueinander ausgerichteten bzw. geknickten Drehachsen (9 und 10) erstreckt und einerseits mit dem Elektromotor (8) und andererseits mit dem Kugelhalslagerkopf (3) oder dem Kugelhals in Wirkverbindung steht.

2. Antriebseinrichtung nach Anspruch 1, **dadurch gekennzeichnet, dass** die geknickten Drehachsen (9 und 10) einen z.B. stumpfen Winkel (α) einschließen.

3. Antriebseinrichtung nach einem der vorhergehenden Ansprüche, **dadurch gekennzeichnet, dass** benachbart der ersten Stirnseite (11) des Elektromotors (8) eine Außenverzahnung (16) eines Antriebszapfens (14) mit einer Innenverzahnung (17) eines Hohlrads (18) des Verbindungsglieds (13) zusammenwirkt.

4. Antriebseinrichtung nach Anspruch 3, **dadurch gekennzeichnet, dass** das Hohlrad (18) drehfest mit dem Verbindungsglied (13) verbunden ist und/oder zwischen dem Hohlrad (18) und einem Gehäuse (15) des Elektromotors (8) eine Dichtung (23) wirksam ist.

5. Antriebseinrichtung nach Anspruch 4, **dadurch gekennzeichnet, dass** die Dichtung (23) nach Art eines umlaufenden Rings an dem Hohlrad (18) angebracht ist.

6. Antriebseinrichtung nach einem der vorhergehenden Ansprüche, **dadurch gekennzeichnet, dass** das Verbindungsglied (13) am Kugelhalslagerkopf (3) unter Vermittlung eines Befestigungsflansches (20) und Schrauben (21) in Lage gehalten wird.

7. Antriebseinrichtung nach einem der vorhergehenden Ansprüche, **dadurch gekennzeichnet, dass** das Verbindungsglied (13) durch eine torsionssteife Balgkupplung (25) gebildet wird oder eine torsionssteife Balgkupplung (25) umfasst.

8. Antriebsenrichtung nach einem der vorhergehenden Ansprüche, **dadurch gekennzeichnet, dass** das Verbindungsglied (13) ein Kreuzgelenk (27) aufweist, das einen ersten festen Wellenabschnitt (28) und einem zweiten festen Wellenabschnitt (29) aufweist, und/oder dass das Verbindungsglied (13) ein torsionssteifes, bezüglich des Winkels (α) biegeflexibles Wellenelement, insbesondere aus einem flexiblen Kunststoff und/oder Gummi und/oder mit einer rohrförmigen Gestalt, umfasst oder dadurch gebildet ist.

9. Antriebseinrichtung nach Anspruch 8, **dadurch gekennzeichnet, dass** das Kreuzgelenk (27) wenigstens ein Verbindungselement (30) umfasst, das mit einem ersten Gelenkzapfen (31) und einem zweite Gelenkzapfen (32) versehen ist, welche Gelenkzapfen (31 und 32) mit Abstand zueinander angeordnet sind.

10. Antriebseinrichtung nach Anspruch 8 oder 9, **dadurch gekennzeichnet, dass** das Kreuzgelenk (27) mittels einer Manschette (35) verkleidet ist, wobei die Manschette (35) Befestigungskrägen (36 und 37) umfasst, die an den Wellenabschnitten (28 und 29) in Lage gehalten werden.

11. Anhängekupplung eines Kraftfahrzeugs mit einer Antriebseinrichtung nach einem der vorhergehenden Ansprüche, wobei die Anhängekupplung einen an einem Kugelhalslagerkopf gehaltenen Kugelhals aufweist.

12. Anhängekupplung nach Anspruch 11, **dadurch gekennzeichnet, dass** der Kugelhals gegenüber dem fahrzeugseitig festlegbaren oder festgelegten Kugelhalslagerkopf oder eine bewegliche Lagerkomponente des Kugelhalslagerkopfs gegenüber einer fahrzeugseitig festlegbaren oder festgelegten Lagerkomponente des Kugelhalslagerkopfs schwenkbar und vorzugsweise verschieblich ist.
